# EUROPEAN PATENT APPLICATION

(11) **EP 4 717 894 A1**
(43) Date of publication of application: **01.04.2026**
(21) Application number: 25203954.0
(22) Date of filing: 23.09.2025
(51) Int. Cl.: F01N 9/00

(54) **SYSTEM AND METHOD FOR MAINTAINING OPERATION OF A REGENERATIVE SOOT FILTER**

(30) Priority: 30.09.2024 US 202463701424 P; 11.12.2024 US 202463730922 P
(71) Applicant: Cummins Power Generation Inc., Fridley, MN 55432 (US)
(72) Inventor: Shuttleworth, Thomas Robert, Fridley, 55432 (US); Robinson, Daniel J., Fridley, 55432 (US)
(74) Representative: Cleveland Scott York

(57) **Abstract**

A powertrain system comprises an internal combustion engine (102) that includes a set of one or more cylinders, and an exhaust system (104) that defines an exhaust flow path for exhaust gases produced by the set of cylinders. The exhaust system includes a regenerative soot filter (126) located along the exhaust flow path. The powertrain system further comprises an electronic control system (108) configured to: determine a pressure differential across the regenerative soot filter based on an upstream exhaust pressure and a downstream exhaust pressure, determine a counter value representing a regeneration status of the regenerative soot filter based on an exhaust temperature and the pressure differential across the regenerative soot filter, and output the counter value representing the regeneration status. Optionally the ash accumulation is also included.

## Description

### TECHNICAL FIELD

This disclosure relates generally to maintaining operation of a regenerative soot filter by selectively providing feedback to human operators regarding a regeneration status of the soot filter.

### BACKGROUND

In many parts of the world, internal combustion engines are subject to increasingly strict emissions regulations. Regulations can limit, for instance, the amount of soot that a diesel engine of given displacement can emit during operation. Accordingly, an exhaust system of a diesel engine can include a regenerative soot filter - e.g., a diesel particulate filter (DPF) that is configured to reduce soot that is emitted to the ambient environment by operation of the engine.

During engine operation, the soot filter traps soot entrained by exhaust gases produced by the engine. The soot filter can include a catalyst wash coat that is configured to accelerate oxidation of the trapped soot in oxygen-rich exhaust gases produced by the engine. However, an engine may be operated for extended periods of time at relatively low load at which the rate of oxidation of the trapped soot is limited by cool exhaust temperatures, such that soot gradually accumulates in the soot filter. Soot can be removed from the soot filter by a regeneration process in which an exhaust temperature of the exhaust gases is increased to level at which the accumulated soot is oxidized at sufficiently high rate - i.e., to remove soot and thereby regenerate the capacity of the soot filter.

In contrast to soot that can be removed from the soot filter by the regeneration process, ash entrained by the exhaust gases produced by the engine can accumulate at the soot filter over the lifetime of the soot filter unless manually cleaned to remove the ash. For example, ash typically comprises inorganic compounds or materials that may not be removed from the soot filter by the regeneration process.

### SUMMARY

According to an example, a powertrain system comprises an internal combustion engine that includes a set of one or more cylinders, and an exhaust system that defines an exhaust flow path for exhaust gases produced by the set of cylinders of the engine. The exhaust system includes: a regenerative soot filter located along the exhaust flow path, an exhaust temperature sensor that provides a measurement of an exhaust temperature, an upstream exhaust pressure sensor located upstream of the soot filter that provides a measurement of an upstream exhaust pressure, and a downstream exhaust pressure sensor located downstream of the soot filter that provides a measurement of a downstream exhaust pressure. The powertrain system further comprises an operator interface, and an electronic control system. The control system is configured to: determine a pressure differential across the soot filter based on the upstream exhaust pressure and the downstream exhaust pressure; determine a counter value representing a regeneration status of the soot filter based on the exhaust temperature and the pressure differential across the soot filter; and output the counter value representing the regeneration status via the operator interface.

According to another example, a method performed by an electronic control system for a powertrain system that includes an internal combustion engine and an exhaust system is disclosed. The method comprises: determining a pressure differential across a regenerative soot filter of the exhaust system based on an upstream exhaust pressure measured upstream of the soot filter and a downstream exhaust pressure measured downstream of the soot filter; determining a counter value representing a regeneration status of the soot filter based on an exhaust temperature measured along an exhaust flow path of the exhaust system and the pressure differential across the soot filter; and outputting the counter value representing the regeneration status via an operator interface of the powertrain system.

According to another example, a computing system for controlling a powertrain system that includes an internal combustion engine and an exhaust system is disclosed. The computing system comprises a logic machine, and a storage machine having instructions stored thereon executable by the logic machine to: determine a pressure differential across a regenerative soot filter of the exhaust system based on an upstream exhaust pressure measured upstream of the soot filter and a downstream exhaust pressure measured downstream of the soot filter; determine a counter value representing a regeneration status of the soot filter based on an exhaust temperature measured along an exhaust flow path of the exhaust system and the pressure differential across the soot filter; and output the counter value representing the regeneration status.

### BRIEF DESCRIPTION OF THE DRAWINGS

FIG. 1 is a schematic diagram depicting an example powertrain system.
FIG. 2 is a schematic diagram depicting an example configuration of an engine and an exhaust system of the powertrain system of FIG. 1.
FIGS. 3 and 4 are flow diagrams depicting example methods that can be performed by an electronic control system of the powertrain system of FIG. 1.
FIG. 5 includes graphs depicting aspects of the method of FIGS. 3 and 4 implemented within the context of an example operating scenario with respect to the powertrain system of FIG. 1.
FIGS. 6, 7, and 8 depict examples of a graphical user interface that can be output by a control system of the powertrain system of FIG. 1.
FIG. 9 is a schematic diagram depicting an example computing system that can form part of the electronic control system of FIG. 1.

### DETAILED DESCRIPTION

As briefly introduced above, regenerative soot filters such as diesel particular filters, as an example, can be periodically regenerated to remove soot that accumulates over time. The process of regenerating a soot filter typically involves operating the soot filter with an exhaust temperature that attains or exceeds a threshold temperature at which the soot is oxidized at a sufficient rate to provide a net reduction of soot at the soot filter. Providing human operators with feedback regarding the regeneration status of a soot filter can enable the operators to efficiently and effectively regenerate the soot filter.

According to a disclosed example, a powertrain system includes an internal combustion engine that includes a set of one or more cylinders, and an exhaust system that defines an exhaust flow path for exhaust gases produced by the set of cylinders of the engine. The exhaust system includes a regenerative soot filter located along the exhaust flow path, an exhaust temperature sensor located along the exhaust flow path that provides a measurement of an exhaust temperature, an upstream exhaust pressure sensor located along the exhaust flow path upstream of the soot filter that provides a measurement of an upstream exhaust pressure, and a downstream exhaust pressure sensor located along the exhaust flow path downstream of the soot filter that provides a measurement of a downstream exhaust pressure.

The powertrain system disclosed herein further includes an operator interface, and an electronic control system that can control operation of the powertrain system. As an example, the control system can determine a pressure differential across the soot filter based on the upstream exhaust pressure and the downstream exhaust pressure. The control system can further determine a counter value representing a regeneration status of the soot filter based on the exhaust temperature and the pressure differential across the soot filter. The control system can output the counter value representing the regeneration status of the soot filter via the operator interface, thereby providing feedback to human operators of the powertrain system.

As described in further detail herein, the pressure differential across the soot filter, in combination with other sensor-based measurements, including the exhaust temperature, offers the potential to provide a more accurate or more precise estimate of soot filter loading as compared to estimates based on exhaust temperature alone. Improved estimates of soot filter loading may help human operators of various types of machinery to anticipate when regeneration is likely to be necessary or beneficial, so that a regeneration process can be initiated or even averted by the operators. Moreover, improved estimates of soot filter loading may help human operators avoid unnecessary, pre-emptive soot filter regeneration, which may needlessly consume fuel or reduce operational efficiency.

Additionally, the approaches and techniques described herein can be implemented to provide human operators with feedback regarding soot filter loading that is based on estimates of ash accumulated at the soot filter. In contrast to soot that can be removed from the soot filter by the regeneration process, ash entrained by the exhaust gases produced by the engine can accumulate at the soot filter over the lifetime of the soot filter unless manually cleaned to remove the ash. For example, ash typically comprises inorganic compounds or materials that may not be removed from the soot filter by the regeneration process. By considering the accumulation of ash at the soot filter over an operational period, a portion of the pressure differential across the soot filter that is attributed to accumulated soot, and not attributed to accumulated ash may lead to further improvements in estimating soot filter loading.

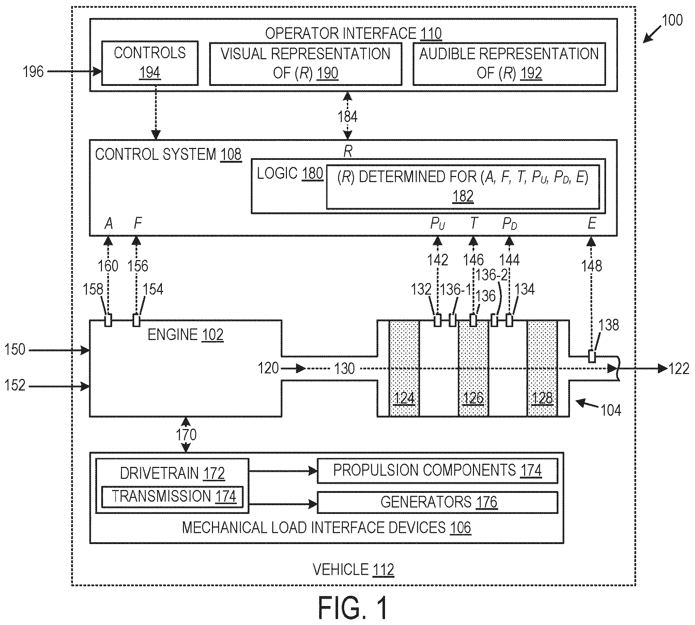

FIG. 1 is a schematic diagram depicting an example powertrain system 100 that includes an internal combustion engine 102, an exhaust system 104, an electronic control system 108, and an operator interface 110, described in further detail herein. Powertrain system 100 can also include one or more mechanical load interface devices 106.

In some examples, powertrain system 100 can form part of a vehicle 112, depicted schematically by broken lines in FIG. 1. Vehicle 112 can take various forms, including a marine vehicle (e.g., a boat, ship, tugboat, barge, etc.), or a land vehicle (e.g., locomotive, truck, car, continuous track vehicle, etc.), as examples. In further examples, powertrain system 100 can form part of other types of mobile platforms or stationary installations. For example, powertrain system 104 can form part of a backup power system for generating electricity for an electrical load.

Engine 102 is fluidically coupled to exhaust system 104 that defines an exhaust flow path 130. Exhaust system 104 includes emissions control components located along exhaust flow path 130 that are suitable for treating exhaust gases 120 produced by the engine to obtain treated exhaust gases 122. In the example of FIG. 1, exhaust system 104 can include an oxidation catalyzer 124, a regenerative soot filter 126, and a NOX (nitrogen oxide(s)) reduction catalyzer 128 located along exhaust flow path 130 of the exhaust system. In this example, oxidation catalyzer 124 is located fluidically upstream of soot filter 126, and soot filter 126 is located fluidically upstream of catalyzer 128. It will be understood that exhaust system 104 can take other suitable forms and can include other suitable components for treating exhaust gases 120 produced by engine 102. For example, exhaust system 104 can include a lean NOX trap in place of or in addition to catalyzer 124.

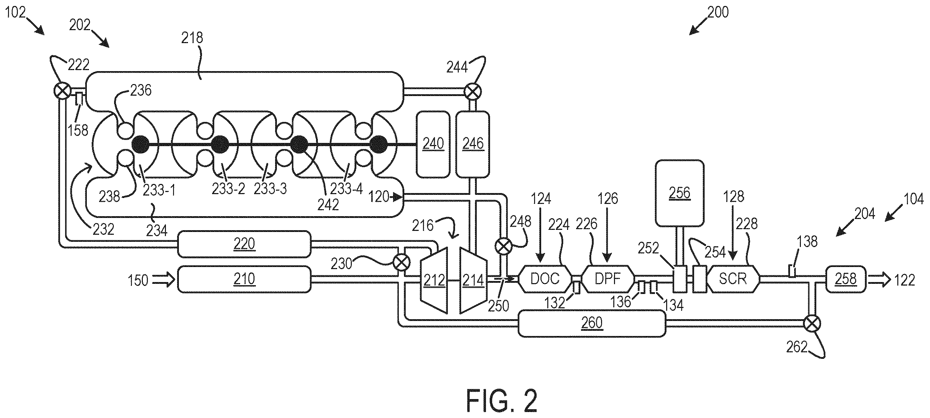

Engine 102 can take various forms. As an example, engine 102 can take the form of a diesel engine. In this example, soot filter 126 can take the form of a diesel particulate filter (DPF), as described in further detail with reference to FIG. 2. Furthermore, in some examples, engine 102 can be operated in a lean-burning combustion mode, and exhaust system 104 can be configured to treat exhaust gases produced by the engine operating in the lean-burning combustion mode.

Powertrain system 100 can include various sensors that provide signals indicating measurements of operating parameters to control system 108. For example, exhaust system 104 includes an upstream pressure sensor 132 located along exhaust flow path 130 of the exhaust system upstream of soot filter 126, a downstream pressure sensor 134 located along exhaust flow path 130 of the exhaust system downstream of soot filter 126, an exhaust temperature sensor 136 located along exhaust flow path 130, and an exhaust flow rate sensor 138 located along exhaust flow path 130.

Upstream pressure sensor 132 outputs a signal 142 to control system 108 that indicates an upstream pressure (*P_{U}*) of exhaust gases along exhaust flow path 130 upstream of soot filter 126. Downstream pressure sensor 134 outputs a signal 144 to control system 108 that indicates a downstream pressure (*P_{D}*) of exhaust gases along exhaust flow path 130 downstream of soot filter 126. As described in further detail herein, a pressure differential across soot filter 126 can be determined by control system 108 based on upstream pressure (*P_{U}*) and downstream pressure (*P_{D}*).

Exhaust temperature sensor 136 outputs a signal 146 to control system 108 that indicates an exhaust temperature (*T*) of exhaust gases flowing along exhaust flow path 130. Exhaust temperature sensor 136 can be used to determine or estimate a temperature of soot filter 126. For example, exhaust temperature sensor 136 can be located at or proximate to soot filter 126. In the example of FIG. 1, exhaust temperature sensor 136 is located downstream of soot filter 126, and upstream of catalyzer 128. In another example, the exhaust temperature sensor can be located at or within soot filter 126 (e.g., as indicated at 136-1), upstream of soot filter 126 (e.g., as indicated at 136-2), or at other suitable location along exhaust flow path 130 of exhaust system 104. Furthermore, in some examples, exhaust system 104 can include two or more exhaust temperature sensors located at different locations along exhaust flow path 130.

Exhaust flow rate sensor 138 outputs a signal 148 to control system 108 that indicates an exhaust flow rate (*E*) of exhaust gases flowing along exhaust flow path 130. As an example, exhaust flow rate (*E*) can take the form of a mass flow rate of exhaust gases. Alternatively or additionally, exhaust flow rate (*E*) can take the form of a volumetric flow rate of exhaust gases. In the example of FIG. 1, exhaust flow rate sensor 138 is located downstream of soot filter 126. However, exhaust flow rate sensor 138 can be located at other suitable locations, including upstream of soot filter 126.

Engine 102 can receive air 150 and fuel 152 as inputs to a combustion process that takes place within one or more combustion chambers (e.g., cylinders) of the engine. Control system 108 can determine a fuel rate (*F*) of fuel 152 supplied to engine 102 that is combusted to produce exhaust gases 120. For example, fuel rate (*F*) can be determined by control system 108 for fuel 152 as part of a control process enacted by the control system. In this example, control system 108 can provide a fuel control signal to one or more fuel injectors of engine 102 that is based on the fuel rate (*F*) determined by the control system to supply fuel 152 to engine 102 according to the fuel rate (*F*). Alternatively or additionally, engine 102 can include a fuel rate sensor 154 that outputs a signal 156 to control system 108 that indicates fuel rate (*F*) for fuel 152 supplied to engine 102 that is combusted to produce exhaust gases 120. Fuel rate (*F*) can take the form of a mass flow rate of fuel 152. Alternatively or additionally, fuel rate (*F*) can take the form of a volumetric flow rate of fuel 152.

Control system 108 can determine an air flow rate (*A*) of air 150 supplied to engine 102 that is combusted to produce exhaust gases 120. For example, engine 102 can include an air flow rate sensor 158 that outputs a signal 160 to control system 108 that indicates air flow rate (A) of air 150 supplied to engine 102. Alternatively or additionally, control system 108 can determine air flow rate (*A*) from a known, predefined volume of the combustion chambers of engine 102 that produce exhaust gases 120, a rate of combustion (e.g., engine speed or RPM), and air intake pressure of air 150 (e.g., obtained from an air intake pressure sensor). Control system 108 can determine air flow rate (*A*) of air 150 using other suitable approaches, including a predefined relationship between fuel rate (*F*) and air flow rate (*A*).

Engine 102 includes a mechanical interface 170 (e.g., a crankshaft) schematically depicted in FIG. 1 that is operatively coupled to one or more mechanical load interface devices 110. Examples of mechanical load interface devices 110 include a drivetrain 172, one or more propulsion components 174, one or more electrical generators 176, etc. Drivetrain 172 can include a mechanical transmission 174 that operatively couples mechanical interface 170 of engine 102 to the one or more propulsion components 174 and/or the one or more generators 176. Examples of propulsion components 174 include one or more marine impellors or turbines (in the context of vehicle 102 taking the form of a marine vehicle), or one or more drive wheels or treads (in the context of vehicle 102 taking the form of a land vehicle). The one or more generators 176 can be operated to generate electrical energy for storage or use by an electrical load. In some examples, vehicle 112 can include one or more electric motors that provide propulsion to the one or more propulsion components 174.

Although FIG. 1 shows a single instance of engine 102 and exhaust system 104, powertrain system 100 can include two or more instances of engine 102 that each supply exhaust gases to exhaust system 104. As another example, powertrain system 100 can include two or more instances of exhaust system 104 that receive exhaust gases from different subsets of combustion chambers (e.g., cylinders) of engine 102.

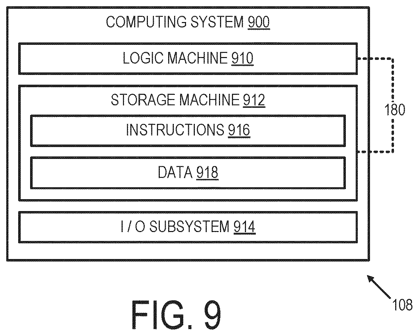

As previously described, control system 108 can obtain measurements of upstream pressure (*P_{U}*), downstream pressure (*P_{D}*)*,* exhaust temperature (*T*), exhaust flow rate (*E*), fuel rate (*F*), and airflow (*A*). As described in further detail with reference to FIG. 9, control system 108 includes logic 180 that enables the control system to determine a regeneration status (*R*) with respect to soot filter 126 at 182 based on measurements obtained for engine 102 and exhaust system 104, including some or all of upstream pressure (*P_{U}*), downstream pressure (*P_{D}*), exhaust temperature (*T*), exhaust flow rate (*E*), fuel rate (*F*), and airflow (*A*). For example, regeneration status (*R*) can indicate one or more values with respect to regeneration of soot filter 126, which can include a counter value, a remaining idle time with respect to engine 102, a time to clean soot filter 126, and status messages that provide operational feedback to a human operator.

In the example of FIG. 1, control system 108 is operatively coupled to operator interface 110 via a communications link 184. Communications link 184 can take the form of a wired or wireless communications link, as examples. Operator interface 110 can include one or more input devices and one or more output devices. For example, operator interface 110 can include one or more operator controls 194 in the form input devices that enable a human operator to control operation of engine 102, exhaust system 104, and mechanical load interface devices 106 via control system 108. Examples of input devices of operator interface 110 that can form operator controls 194 include physical controller devices, such as levers, buttons, sliders, a computer mouse, a handheld controller, a touch-enabled graphical display (e.g., touch screen) etc.). For example, a human operator of powertrain system 100 can provide operator input 196 to operator controls 194 of operator interface 110. Control signals 198 can be output by operator interface 110 to control system 108 via a communications link 184 responsive to operator input 196 provided to operator controls 194.

Control system 108 can receive control signals 198 from operator interface 110 via communications link 184, and can control operation of engine 102, exhaust system 104, and mechanical load interface devices 106 responsive to control signals 198. For example, control system 108 can increase or decrease air flow rate (*A*) of air 150, fuel rate 152 (F) of fuel 152, gear ratio of transmission 174, and/or mechanical loading of propulsion components 174 or generators 176 responsive to control signals 198.

Control system 108 can output regeneration status (*R*) to operator interface 110 via communications link 184 for presentation of the one or more values indicated by regeneration status (*R*) via operator interface 110. For example, operator interface 110 can present a visual representation 190 and/or audible representation 192 of values indicated by regeneration status (*R*) via one or more output devices of operator interface 110. Examples of output devices of operator interface 110 include a graphical display device, electronic display panel, instrumentation panel, indicator lighting devices, audio speaker, etc. For example, visual representation 190 can be visually output via a graphical display device, electronic display panel, instrumentation panel, or indicator lighting devices of operator interface 110. Audio representation 192 can be audibly output via an audio speaker of operator interface 110, as an example.

Visual representation 190 and audible representation 192 of values indicated by regeneration status (*R*) can provide feedback to a human operator that enables the human operator to determine whether operation of powertrain system 100 is to be varied through operator input 196. Additionally, operator interface 110 can provide a visual representation and/or audio representation of upstream pressure (*P_{U}*), downstream pressure (*P_{D}*), exhaust temperature (*T*), exhaust flow rate (*E*), fuel rate (*F*), and airflow (*A*) via one or more output devices of the operator interface, as additional examples of feedback that can be provided to a human operator.

FIG. 2 is a schematic diagram depicting an example configuration 200 of engine 102 and exhaust system 104 of FIG. 1. In example configuration 200 of FIG. 2, engine 102 takes the form of a diesel engine 202, and exhaust system 104 takes the form of a diesel exhaust system 204.

In example configuration 200 of FIG. 2, diesel exhaust system 204 includes diesel oxidation catalyst (DOC) 224 as an example of oxidation catalyzer 124 of FIG. 1, diesel particulate filter (DPF) 226 as an example of regenerative soot filter 126 of FIG. 1, and a selective catalytic reduction (SCR) device 228 as an example of reduction catalyzer 128 of FIG. 1.

In example configuration 200 of FIG. 2, air 150 is inducted into air cleaner 210 and flows to a compressor 212 of diesel engine 202. Compressor 212 can be omitted in some examples. Compressor 212 can be operatively coupled to a turbine 214 as part of a turbocharger 216, in which the turbine is driven by expanding exhaust gases produced by diesel engine 202. Turbine 214 and turbocharger 216 can be omitted in some examples. Compressor 212 is coupled fluidically to an intake manifold 218 of diesel engine 202 via charge-air cooler (CAC) 220 and throttle valve 222. CAC 220 can be omitted in some examples. Pressurized air from the compressor flows through the CAC and the throttle valve to intake manifold 218. In the example of FIG. 2, a compressor bypass valve 230 is coupled between an inlet and an outlet of compressor 212. Compressor bypass valve 230 can be opened by control system 108 of FIG. 1 to relieve excess boost pressure under select operating conditions. Compressor bypass valve 230 can be omitted in some examples.

Diesel engine 202 includes a set of cylinders 232 that are fluidically coupled to intake manifold 218 and exhaust manifold 234. In the example of FIG. 2, the set of cylinders 232 includes four cylinders 233-1, 233-2, 233-3, and 233-4 that are fluidically coupled to exhaust system 204 via an exhaust manifold 234 such that exhaust gases produced by combustion within the set of cylinders are treated by exhaust system 204. It will be understood that the set of cylinders 232 can include any suitable quantity of cylinders (e.g., 1, 2, 3, 5, 6 or more) that are fluidically coupled to exhaust system 204 via exhaust manifold 234. Furthermore, it will be understood that diesel engine 202 can include additional cylinders beyond the set of cylinders 232 that are fluidically coupled to another exhaust system.

Each cylinder of the set of cylinders 232 is fluidically coupled to intake manifold 218 by one or more intake valves. An example intake valve is depicted in FIG. 1 with respect to reference numeral 236. Each cylinder of the set of cylinders 232 is fluidically coupled to exhaust manifold 234 via one or more exhaust valves. An example exhaust valve is depicted in FIG. 1 with respect to reference numeral 238. In some examples, the intake valves and/or exhaust valves of the cylinders are electronically actuated by control system 108. In other examples, the intake valves and/or exhaust valves can be cam actuated. Whether electronically actuated or cam actuated, an opening and closing timing of the intake and exhaust valves opening and closure may be adjusted for desired combustion and emissions-control performance.

The set of cylinders 232 of diesel engine 202 can be supplied any of a variety of fuels, such as diesel, biodiesel, or mixtures thereof. In FIG. 2, fuel 152 of FIG. 1 is supplied from fuel system 240 to the set of cylinders 232 via direct injection through fuel injectors, an example of which is depicted with respect to fuel injector 242.

In example configuration 200, diesel engine 202 includes a high-pressure (HP) exhaust-gas recirculation (EGR) valve 244 and a HP EGR cooler 246. In some examples, EGR valve 244 and EGR cooler 246 can be omitted. When EGR valve 244 is open, some of exhaust gases 120 from exhaust manifold 234 is drawn through EGR cooler 246 to intake manifold 218. In intake manifold 218, the recirculated exhaust gases dilute the intake air, which offers the potential for cooler combustion temperatures, decreased emissions, and other benefits. The remaining exhaust gases of exhaust gases 120 flows to turbine 214 to drive the turbine and compressor 212. When reduced turbine torque is desired, some or all of the exhaust gases can be directed by control system 108 through waste gate 248, bypassing turbine 214.

The combined flow 250 from turbine 214 and waste gate 248 flows through the various exhaust aftertreatment devices of diesel exhaust system 204, including DOC 224, DPF 226, and SCR device 228. In example configuration 200, DOC 224 is located downstream of turbine 214. DOC 224 can include an internal catalyst-support structure to which a DOC wash coat is applied. DOC 224 is configured to oxidize residual CO, hydrogen, and hydrocarbons that may be present in the exhaust gases.

In example configuration 200, DPF 226 is located downstream of DOC 224. DPF 226 is configured to trap soot entrained in the exhaust gases, but can further trap ash that is entrained in the exhaust gases. In an example, DPF 226 includes a soot-filtering substrate, and a wash coat applied to the soot-filtering substrate that promotes oxidation of accumulated soot and recovery of filter capacity under certain conditions (e.g., exhaust temperatures that exceed a threshold). In some examples and scenarios, trapped soot and/or ash may accumulate in DPF 226 over time and be subjected to intermittent oxidizing conditions, in which engine function is adjusted to provide exhaust gases of a temperature that attains or exceeds a threshold temperature at which the DPF can be cleaned through oxidation of accumulated soot and recovery of filter capacity. In some examples and scenarios, trapped soot may be oxidized under steady-state conditions (continuously or quasi-continuously) during normal engine operation.

In example configuration 200, SCR device 228 is located downstream of DPF 226. In some examples, diesel exhaust system 204 can include a reductant injector 252 and/or a reductant mixer 254 between DPF 226 and SCR device 228. Reductant injector 252 is configured to receive a reductant (e.g., a urea solution) from a reductant reservoir 256 and to controllably inject the reductant into the exhaust flow. Reductant mixer 254 located downstream of reductant injector 252 is configured to increase the extent and/or homogeneity of dispersion of injected reductant in the exhaust flow. As an example, reductant mixer 354 can include one or more vanes configured to increase mixing of the exhaust flow and entrained reductant to improve the dispersion. Upon being dispersed in the exhaust gases, at least some of the injected reductant may decompose. In examples where the reductant is a urea solution, the reductant decomposes into water, ammonia, and carbon dioxide. The remaining urea can decompose on impact or interaction with SCR device 228.

SCR device 228 is configured to facilitate one or more chemical reactions between ammonia formed by the decomposition of the injected reductant and NOX contained in the exhaust gases, thereby reducing the amount of NOX released into the ambient environment. SCR device 228 is configured to sorb the NOX and the ammonia, and to catalyze the redox reaction of the same to form dinitrogen (N₂) and water. In some examples reductant injector 252, reductant mixer 254, reservoir 256, and SCR device 228 can be omitted, and a lean NOX trap (LNT) can be located downstream of DPF 226. The LNT can be configured to trap NOX from the exhaust flow when the exhaust gases are lean and to reduce the trapped NOX when the exhaust gases are rich.

All or part of the treated exhaust gases 122 can be released into the ambient environment via a silencer or muffler 258. Depending on operating conditions, however, some of the treated exhaust gases can be diverted by control system 208 through a low-pressure (LP) EGR cooler 260, before or after emissions-control treatment. The exhaust gases can be diverted by opening an LP EGR valve 262, arranged in series with LP EGR cooler 260. From LP EGR cooler 260, the cooled exhaust gas flows to compressor 212. Other configurations may include an air-intake system (AIS) throttle valve located downstream of air cleaner 210 but upstream of LP EGR entry. LP EGR cooler 260 and LP EGR valve 262 can be omitted in some examples.

In FIG. 2, sensors 132, 134, 136, 138, and 158 of FIG. 1 are depicted at example locations within the context of diesel engine 202 and diesel exhaust system 204 of example configuration 200. For example, upstream pressure sensor 132 and downstream pressure sensor 134 are located upstream and downstream of DPF 226, respectively. Exhaust temperature sensor 136 is located downstream of DPF 226 in this example. As previously described, exhaust temperature sensor 136 can be located at other suitable locations relative to DPF 226, including upstream of the DPF or at the DPF, as examples. Exhaust flow sensor 138 is located downstream of DPF 226, in this example. Furthermore, in this example, exhaust flow sensor 138 is located upstream of the EGR flow path to EGR cooler 260. Air flow rate sensor 158 is located downstream of throttle valve 222, in this example. However, air flow rate sensor 158 can be located upstream of throttle valve 222 in other examples.

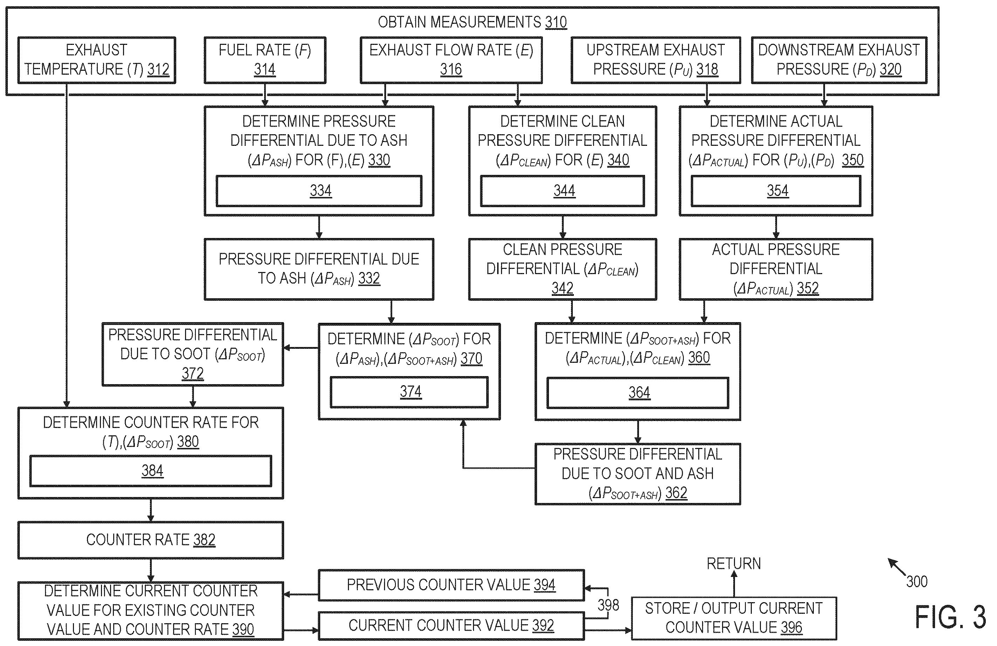

FIG. 3 is a flow diagram depicting an example method 300. As an example, method 300 can be performed by control system 108 of FIG. 1 implementing logic 180 for controlling operation of powertrain system 100 of FIG. 1 that includes an internal combustion engine and an exhaust system.

At 310, the method can include obtaining measurements of one or more operating conditions of a powertrain system, such as powertrain system 100 of FIG. 1. Measurements obtained at 310 can include exhaust temperature (*T*) 312, fuel rate (*F*) 314, exhaust flow rate (*E*) 316, upstream exhaust pressure (*P_{U}*) 318, and downstream exhaust pressure (*P_{D}*) 320, as examples.

As previously described with reference to FIG. 1, the measurements obtained at 310 can include control system 108 receiving signals from sensors of engine 102 and exhaust system 104. For example, control system 108 can obtain exhaust temperature (*T*) by receiving signal 146 from exhaust temperature sensor 136; control system 108 can obtain exhaust flow rate (*E*) by receiving signal 148 from exhaust flow sensor 138; control system 108 can obtain upstream exhaust pressure (*P_{U}*) by receiving signal 142 from upstream pressure sensor 132; and control system 108 can obtain downstream exhaust pressure (*P_{D}*) by receiving signal 144 from downstream pressure sensor 134. In some examples, control system 108 can obtain fuel rate (*F*) from a control process enacted by the control system as part of generating a fuel control signal for fuel injectors of the engine. Alternatively or additionally, control system 108 can obtain fuel rate (*F*) by receiving signal 156 from fuel rate sensor 154.

In some examples, obtaining measurements at 310 can include control system 108 obtaining air flow rate (*A*) by receiving signal 160 from air flow rate sensor 158, as previously described with reference to FIG. 1. For example, the exhaust flow rate (*E*) can be obtained by control system 108 determining the exhaust flow rate (*E*) based on the air flow rate (*A*) in combination with EGR ratios that involve recirculation of a portion of the exhaust gases.

At 330, the method can include determining a pressure differential due to ash (*ΔP_{ASH}*) 332 for the fuel rate (*F*) and the exhaust flow rate (*E*). The pressure differential due to ash (*ΔP_{ASH}*) can refer to an expected pressure differential across soot filter 126 of FIG. 1 (e.g., a DPF) that is due to the accumulation of ash at the soot filter. Ash can accumulate at the soot filter over time due to operation of the engine. As ash typically comprises inorganic compounds or materials that are not removed from the soot filter by the regeneration process, ash that is captured by the soot filter can remain for the life of the soot filter unless the soot filter is manually cleaned.

The pressure differential due to ash (*ΔP_{ASH}*) can be determined by the control system at 330 based on a predefined relationship 334 between the pressure differential due to ash (*ΔP_{ASH}*), the fuel rate (*F*), and the exhaust flow rate (*E*) that is stored at the control system. As an example, predefined relationship 334 can take the form of a function that can be used by the control system to compute the pressure differential due to ash (*ΔP_{ASH}*) based on the fuel rate (*F*) and the exhaust flow rate (*E*) as inputs to the function. As another example, predefined relationship 334 can take the form of a data table or other data structure that can be used by the control system to determine the pressure differential due to ash (*ΔP_{ASH}*) based on the fuel rate (*F*) and the exhaust flow rate (*E*).

In some examples, the control system can account for ash accumulated at the soot filter over the lifetime of the soot filter or since the soot filter was manually cleaned to remove ash by aggregating and maintaining an expected quantity (e.g., mass or volume quantity) of ash based on the fuel rate (*F*) and the exhaust flow rate (*E*) during a period of time that the soot filter was located in the exhaust system of the engine. For example, predefined relationship 334 can define an amount of ash (e.g., mass or volume) for a given fuel rate (*F*) and exhaust flow rate (*E*). The control system can aggregate the amount of ash produced at each time interval that fuel rate (*F*) and exhaust flow rate (*E*) measurements are obtained by the control system across all time intervals of the lifetime of the soot filter or since the soot filter was manually cleaned to remove ash. In this example, the control system can add an incremental amount of ash determined for a given time interval based on fuel rate (*F*) and exhaust flow rate (*E*) of that time interval to a total amount of accumulated ash that is maintained by the control system for the soot filter.

Predefined relationship 334 can further define a corresponding value for the pressure differential due to ash (*ΔP_{ASH}*) that is based on the amount of accumulated ash that is maintained by the control system for the soot filter. The amount of accumulated ash can be stored at the control system and updated at each time interval. As an example, the relationship between the amount of accumulated ash and the pressure differential due to ash (*ΔP_{ASH}*) can be determined experimentally or through modeling across a range of values of accumulated ash for similarly configured soot filters. For example, the pressure differential due to ash (*ΔP_{ASH}*) can increase as the amount of accumulated ash increases over the lifetime of the soot filter or since the soot filter was manually cleaned to remove ash.

At 340, the method can include determining a clean pressure differential (*ΔP_{CLEAN}*) 342 for exhaust flow rate (*E*). The clean pressure differential (*ΔP_{CLEAN}*) refers to an estimate of the pressure differential across soot filter 126 (e.g., DPF) of FIG. 1 for a clean state of the filter in which neither soot nor ash is accumulated in the filter for the exhaust flow rate (*E*). As an example, the clean pressure differential (*ΔP_{CLEAN}*) can correspond to an expected value of the pressure difference between a location (e.g., sensor 132) within the exhaust system at which the measurement of the upstream exhaust pressure (*P_{U}*) was obtained and a location (e.g., sensor 134) within the exhaust system at which the measurement of the downstream exhaust pressure (*P_{D}*) was obtained for the clean state of the soot filter.

The clean pressure differential (*ΔP_{CLEAN}*) can be determined by the control system at 340 based on a predefined relationship 344 between the exhaust flow rate (*E*) and the clean pressure differential (*ΔP_{CLEAN}*) that is stored at the control system. As an example, predefined relationship 344 can take the form of a function that can be used by the control system to compute the clean pressure differential (*ΔP_{CLEAN}*) based on the exhaust flow rate (*E*) as an input to the function. As another example, predefined relationship 344 can take the form of a data table or other data structure that can be used by the control system to determine the clean pressure differential (*ΔP_{CLEAN}*) based on the exhaust flow rate (*E*). The table below is an example of a data table of predefined relationship 344 that can be used by the control system to determine the clean pressure differential (*ΔP_{CLEAN}*) based on the exhaust flow rate (*E*).

| Exhaust flow rate (*E*) / cfm | *ΔP_{clean}* / kPa |
|---|---|
| 0 | 0 |
| 500 | 0.5 |
| 1000 | 1.5 |
| 1500 | 3.5 |
| 2000 | 6.0 |
| 2500 | 12.0 |

The specific values shown in the table above are provided as an example of predefined relationship 344. It will be understood that the specific values of predefined relationship 344 can vary based on factors that include the type or configuration of the DPF, the configuration of the exhaust pathway, the location within the exhaust system at which the measurement of the upstream exhaust pressure (*P_{U}*) is obtained, and the location within the exhaust system at which the measurement of the downstream exhaust pressure (*P_{D}*) is obtained. In some examples, the values of predefined relationship 344, including the values provided in the table above can be determined experimentally based on measurements of the upstream exhaust pressure (*P_{U}*) and the downstream exhaust pressure (*P_{D}*) across a range of exhaust flow rates.

At 350, the method can include determining an actual pressure differential (*ΔP_{ACTUAL}*) 352 for the upstream exhaust pressure (*P_{U}*) and the downstream exhaust pressure (*P_{D}*) obtained at 310. The actual pressure differential due to ash (*ΔP_{ACTUAL}*) can refer to the pressure differential across soot filter 126 (e.g., DPF) of FIG. 1 that is measured by upstream pressure sensor 132 and downstream pressure sensor 134. The actual pressure differential (*ΔP_{ACTUAL}*) can be determined by the control system at 350 based on a predefined relationship 354 between the upstream exhaust pressure (*P_{U}*) and the downstream exhaust pressure (*P_{D}*) that is stored at the control system. As an example, predefined relationship 354 can take the form of a function that can be used by the control system to compute the actual pressure differential (*ΔP_{ACTUAL}*) based on the upstream exhaust pressure (*P_{U}*) and the downstream exhaust pressure (*P_{D}*) as an inputs to the function. For example, the function of predefined relationship 354 can be defined as (*ΔP_{ACTUAL}*) *=* (*P_{U}*) *-* (*P_{D}*). As another example, predefined relationship 354 can take the form of a data table or other data structure that can be used by the control system to determine the actual pressure differential (*ΔP_{ACTUAL}*) based on the upstream exhaust pressure (*P_{U}*) and the downstream exhaust pressure (*P_{D}*).

At 360, the method can include determining a pressure differential due to soot and ash (*ΔP_{SOOT+ASH}*) 362 for actual pressure differential (*ΔP_{ACTUAL}*) determined at 350 and the clean pressure differential (*ΔP_{CLEAN}*) determined at 340. The pressure differential due to soot and ash (*ΔP_{SOOT+ASH}*) can refer to a pressure differential across soot filter 126 (e.g., DPF) of FIG. 1 that is due to accumulation of soot and ash at the filter. The pressure differential due to soot and ash (*ΔP_{SOOT+ASH}*) can be determined by the control system at 360 based on a predefined relationship 364 between the actual pressure differential (*ΔP_{ACTUAL}*), the clean pressure differential (*ΔP_{CLEAN}*), and the pressure differential due to soot and ash (*ΔP_{SOOT+ASH}*) that is stored at the control system. As an example, predefined relationship 364 can take the form of a function that can be used by the control system to compute the pressure differential due to soot and ash (*ΔP_{SOOT+ASH}*) based on the actual pressure differential (*ΔP_{ACTUAL}*) and the clean pressure differential (*ΔP_{CLEAN}*) as an inputs to the function. For example, the function of predefined relationship 364 can be defined as (*ΔP_{SOOT+ASH}*) *=* (*ΔP_{ACTUAL}*) *-* (*ΔP_{CLEAN}*). As another example, predefined relationship 364 can take the form of a data table or other data structure that can be used by the control system to determine the pressure differential due to soot and ash (*ΔP_{SOOT+ASH}*) based on the actual pressure differential (*ΔP_{ACTUAL}*) and the clean pressure differential (*ΔP_{CLEAN}*).

At 370, the method can include determining a pressure differential due to soot (*ΔP_{SOOT}*) 372 for the pressure differential due to ash (*ΔP_{ASH}*) determined at 330 and the pressure differential due to soot and ash (*ΔP_{SOOT+ASH}*) determined at 360. In this example, the pressure differential due to soot (*ΔP_{SOOT}*) refers to a portion of the pressure differential due to soot and ash (*ΔP_{SOOT+ASH}*) that is due to accumulation of soot at soot filter 126 (e.g., DPF) of FIG. 1. The pressure differential due to soot (*ΔP_{SOOT}*) can be determined by the control system at 370 based on a predefined relationship 374 between the pressure differential due to ash (*ΔP_{ASH}*), the pressure differential due to soot and ash (*ΔP_{SOOT+ASH}*), and the pressure differential due to soot (*ΔP_{SOOT}*) that is stored at the control system. As an example, predefined relationship 374 can take the form of a function that can be used by the control system to compute the pressure differential due to soot (*ΔP_{SOOT}*) based on the pressure differential due to ash (*ΔP_{ASH}*) and the pressure differential due to soot and ash (*ΔP_{SOOT+ASH}*) as an inputs to the function. For example, the function of predefined relationship 374 can be defined as (*ΔP_{SOOT}*) *=* (*ΔP_{SOOT+ASH}*) *-* (*ΔP_{ASH}*). As another example, predefined relationship 374 can take the form of a data table or other data structure that can be used by the control system to determine the pressure differential due to soot *(*Δ*P_{SOOT}*) based on the pressure differential due to ash (*ΔP_{ASH}*) and the pressure differential due to soot and ash (*ΔP_{SOOT+ASH}*).

At 380, the method can include determining a counter rate 382 for the exhaust temperature (*T*) obtained at 310 and the pressure differential due to soot (*ΔP_{SOOT}*) determined at 370. The counter rate can refer to a rate or magnitude at which a counter value with respect to a regeneration status of soot filter 126 (e.g., DPF) of FIG. 1 is adjusted upwards or downwards. The counter rate can be determined by the control system at 370 based on a predefined relationship 384 between the counter rate, the exhaust temperature (*T*), and the pressure differential due to soot (*ΔP_{SOOT}*) that is stored at the control system. As an example, predefined relationship 384 can take the form of a function that can be used by the control system to compute the counter rate based on the exhaust temperature (*T*) and the pressure differential due to soot (*ΔP_{SOOT}*) as an inputs to the function. As another example, predefined relationship 384 can take the form of a data table or other data structure that can be used by the control system to determine the counter rate based on the exhaust temperature (*T*) and the pressure differential due to soot (*ΔP_{SOOT}*).

The table below provides an example of predefined relationship 384 in which a base rate for the counter rate is provided for three temperature ranges. It will be understood that the temperature ranges identified in the table below are provided for illustrative purposes and that other suitable temperature ranges can be utilized. For example, suitable temperature ranges for a particular exhaust system configuration can be identified or adjusted based on physical testing or modeling.

| (*T*) / °C | Base Rate |
|---|---|
| < 350 | ++ |
| 350 to 450 | 0 |
| > 450 | - |

In example table above, the range 350 to 450 °C is the range over which the rates of soot trapping and soot oxidation in the regenerative soot filter are at steady state. Accordingly, the counter does not advance with the passage of time, engine cycles, manifold air flow, or exhaust flow. At temperatures below 350 °C, the filter traps soot, but little or no soot is oxidized. In this range the counter advances at base rate of two ticks for every time interval (e.g., second, minute, or the like), engine cycles (e.g., 100 revolutions, 1000 revolutions, or the like), or manifold or exhaust flow (e.g., 1 gram, cubic foot, or the like). At temperatures above 450 °C, the rate of soot oxidation exceeds the rate of soot trapping. In this range, the counter decrements by one tick for every time interval, engine cycles, unit of manifold air flow, or unit of exhaust flow. It will be understood that other suitable temperature ranges and/or base rates can be used.

In the example above, the state of the counter at any given time represents the accumulation of exhaust temperature (*T*) from the exhaust temperature sensor. Such accumulation comprises advancing the counter in an upward direction (e.g., positive direction) when (*T*) is below a lower threshold, and, advancing the counter in a downward direction (e.g., negative direction) when (*T*) is above an upper threshold. The approach of advancing the counter at a fixed, upward rate (e.g., according to the base rate) may be suitable in some scenarios. In method 300, however, the counter is configured to advance at a variable rate in the upward direction, under the conditions described above. More specifically, the variable rate of advance is controlled so as to be commensurate to (*ΔPₛₒₒₜ*), as shown by example in the table below.

| *ΔPₛₒₒₜ* / kPa | Factor |
|---|---|
| 0 | 0 |
| 1.5 | + |
| 3.0 | + |
| 4.5 | ++ |
| 6.0 | ++ |
| 7.5 | +++ |

In this manner, the variable rate of upward advance of the counter may be adjusted in dependence on signal *P_{U}* from the upstream exhaust pressure sensor relative to signal *P_{D}* from the downstream exhaust pressure sensor, and more particularly based on (*ΔPₛₒₒₜ*)*.*

At 390, the method includes determining a current counter value 392 for a previous counter value 394 and counter rate 382 determined at 380. Previous counter value 394 can be obtained from a previous iteration of method 300, as described below. As an example, at 390, the previous counter value 394 stored at the control system can be incremented, decremented, or maintained by counter rate 382 to obtain current counter value 392. In this example, counter rate 382 can be a positive value, a negative value, or a null value that is combined with previous counter value 394 to obtain current counter value 392. For example, where counter rate 382 is a positive value, previous counter value 394 can be incremented upwards or increased by a magnitude of counter rate 392 to obtain current counter value 392. As another example, where counter rate 392 is a negative value, previous counter value 394 can be incremented downwards or reduced by a magnitude of counter rate 392 to obtain current counter value 392. As yet another example, where counter rate 392 is a null value indicating no change, previous counter value 394 can be maintained as current counter value 392.

At 396, the control system can store current counter value 392 at the control system, and can output current counter value 392 to operator interface 110 of FIG. 1. Current counter value 392 is an example of the regeneration status (*R*) of FIG. 1. For example, current counter value 392 can be output by control system 108 via operator interface 110 as a visual indication of regeneration status (*R*) at 190 and/or as an audible indication of regeneration status (*R*) at 192 of FIG. 1. By outputting current counter value 392, a human operator of powertrain system 100 of FIG. 1 can receive feedback with respect to an operating state of soot filter 126.

From 396, the control system can return to 310 to repeat method 300 for a subsequent time interval. As indicated at 398, current counter value 392 can be used as previous counter value 394 for the subsequent time interval for which method 300 is performed.

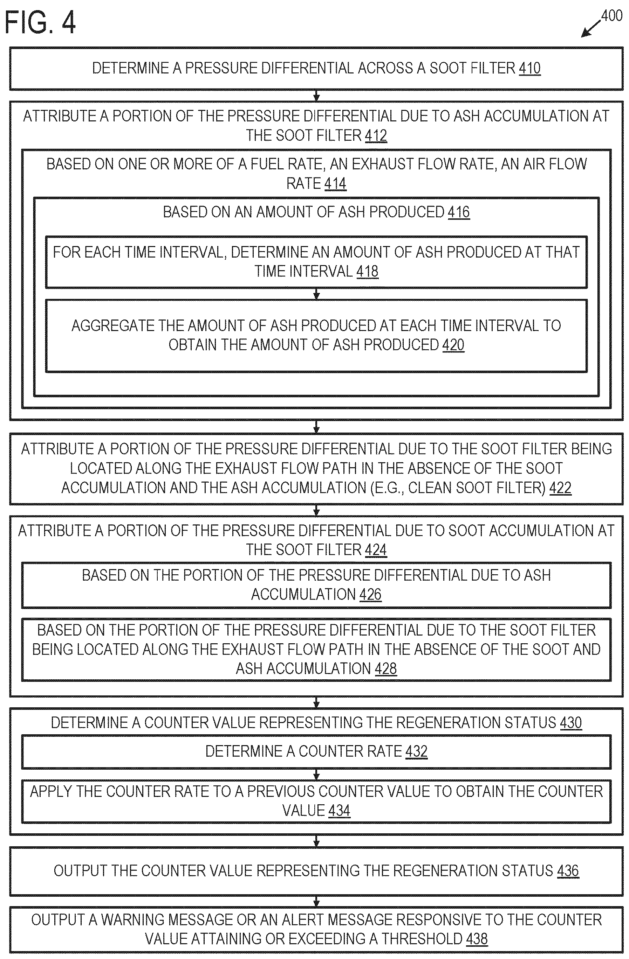

FIG. 4 is a flow diagram depicting an example method 400. As an example, method 400 can be performed by electronic control system 108 of FIG. 1 implementing logic 180 for controlling operation of powertrain system 100 of FIG. 1 that includes an internal combustion engine and an exhaust system. Method 400 describes aspects of method 300 of FIG. 3 in further detail.

In the previously described method 300 of FIG. 3, various portions of (*ΔP_{ACTUAL}*) are determined, including (*ΔP_{ASH}*), (*ΔP_{SOOT}*), and (*ΔP_{CLEAN}*) that collectively contribute to (*ΔP_{ACTUAL}*). In method 400 of FIG. 4, these various portions of (*ΔP_{ACTUAL}*) are described as being attributed to (*ΔP_{ASH}*), (*ΔP_{SOOT}*), and (*ΔP_{CLEAN}*).

At 410, the method can include determining a pressure differential (*ΔP_{ACTUAL}*) across a soot filter, such as regenerative soot filter 126 of FIG. 1. As an example, the pressure differential (*ΔP_{ACTUAL}*) across the soot filter can be based on the upstream exhaust pressure and the downstream exhaust pressure. For example, the method at 410 can include performing operation 350 of FIG. 3.

At 412, the method can include attributing a portion of the pressure differential (*ΔP_{ACTUAL}*) determined at 410 due to ash accumulation at the soot filter. For example, the portion of the pressure differential (*ΔP_{ACTUAL}*) due to ash accumulation as the soot filter can refer to the pressure differential due to ash (*ΔP_{ASH}*) determined at operation 330 of FIG. 3. As indicated at 414, the portion of the pressure differential due to ash accumulation at the soot filter can be based on one or more of fuel rate (*F*), exhaust flow rate (*E*), an air flow rate (*A*) for the set of cylinders (e.g., 232) of the engine. Furthermore, as indicated at 416, the portion of the pressure differential due to ash accumulation at the soot filter can be based on an amount of ash produced by the set of cylinders over a period of time, as previously described with reference to operation 330. As an example, as part of operation 416, the method at 418 can include, for each time interval of multiple time intervals of the period of time, determining an amount of ash produced by the set of cylinders at that time interval based on one or more of the fuel rate (*F*), the exhaust flow rate (*E*), and/or the air flow rate (*A*) for that time interval. Furthermore, as part of operation 416, the method at 420, can include aggregating the amount of ash produced at each time interval of the multiple time intervals to obtain the amount of ash produced by the set of cylinders over the period of time.

At 422, the method can include attributing a portion of the pressure differential (*ΔP_{ACTUAL}*) determined at 410 due to the soot filter being located along the exhaust flow path in the absence of soot accumulation and ash accumulation. The portion attributed to the soot filter at 422 refers to (*ΔP_{CLEAN}*) as previously described with reference to operation 340 of FIG. 3.

At 424, the method can include attributing a portion (*ΔP_{SOOT}*) of the pressure differential (*ΔP_{ACTUAL}*) determined at 410 due to soot accumulation at the soot filter. As indicated at 426, (*ΔAP_{SOOT}*) can be based on the portion (*ΔP_{ASH}*) of the pressure differential due to ash accumulation. Furthermore, as indicated at 428, (*ΔP_{SOOT}*) can be based on the portion (*ΔP_{CLEAN}*) of the pressure differential (*ΔP_{ACTUAL}*) due to the soot filter being located along the exhaust flow path in the absence of soot and ash accumulation. For example, (*ΔP_{SOOT}*) can be determined as previously described with reference to operations 360 and 370 of FIG. 3.

At 430, the method can include determining a counter value (e.g., current counter value 392) representing the regeneration status (R) of the soot filter, such as previously described with reference to operations 380 and 390 of FIG. 3. In at least some examples, the counter value can be based on the exhaust temperate (*T*) and the portion (*ΔP_{SOOT}*) of the pressure differential (*ΔP_{ACTUAL}*) attributed to soot accumulation. For example, at 432, the method can include determining a counter rate (e.g., 382 of FIG. 3) based on the exhaust temperature (*T*) and (*Δ*P*_{SOOT}*), as previously described with reference to operation 380. As part of determining the counter value at operation 430, the method at 434 can include applying the counter rate determined at 432 to a previous counter value (e.g., 394) to obtain the counter value (e.g., current counter value 392). For example, operation 434 can refer to operation 390 of FIG. 3.

At 436, the method can include outputting the counter value determined at 430 representing the regeneration status (*R*) , such as previously described with reference to operation 396 of FIG. 3. As an example, the counter value can be output via operator interface 110 of FIG. 1.

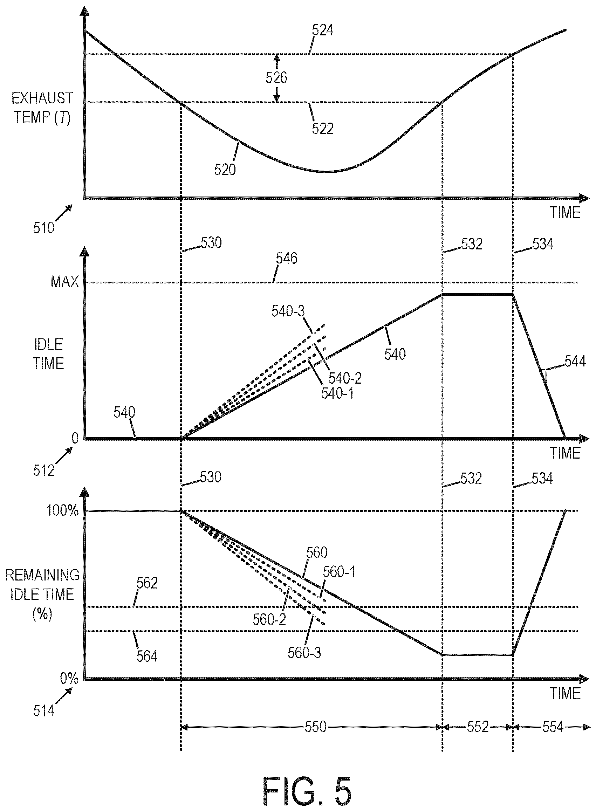

At 438, the method can include outputting a warning message or an alert message responsive to the counter value attaining or exceeding a threshold. As an example, the warning message or alert message can be output via operator interface 110 of FIG. 1. For example, as described in further detail with reference to FIGS. 5 - 8, a warning threshold or an alert threshold representing a threshold counter value can be used by the control system to determine whether a warning message or an alert message is to be output via the operator interface.

FIG. 5 depicts aspects of method 300 of FIGS. 3 and 4 implemented within the context of an example operating scenario with respect to powertrain system 100 of FIG. 1. FIG. 5 depicts an upper graph 510, a middle graph 512, and a lower graph 514 that are aligned in time along the horizontal axis.

Upper graph 510 depicts an example relationship between exhaust temperature (*T*) on the vertical axis and time on the horizontal axis. Exhaust temperature (*T*) represented by the vertical axis of upper graph 510 can be measured by exhaust temperature sensor 136 of FIG. 1, as an example. It will be understood that the temperature sensor can have other suitable locations relative to soot filter 126 of FIG. 1.

In upper graph 510, exhaust temperature (*T*) varies over time as indicated by line 520. A threshold temperature 522 and a target temperature 524 with respect to for exhaust temperature (*T*) are represented by horizontal lines overlaid upon upper graph 510. Threshold temperature 522 can be defined at the control system as a value of exhaust temperature (*T*) at which, and at temperatures above threshold temperature 522, regeneration (cleaning) of soot filter 126 occurs. Target temperature 524 is greater than threshold temperature 522, and a temperature difference 526 between threshold temperature 522 and target temperature 524 is depicted in upper graph 510.

In some examples, temperature difference 526 can take the form of a parameterized difference in temperature that is computed by the control system. The control system can determine target temperature 524 based on temperature difference 526 and threshold temperature 522. For example, target temperature 524 can be computed as the sum of threshold temperature 522 and temperature difference 526. Threshold temperature 522, target temperature 524, and temperature difference 526 can be stored at the control system.

In the example scenario depicted in FIG. 5, the exhaust temperature (*T*) represented by line 520 is initially greater than target temperature 524. The exhaust temperature (*T*) represented by line 520 decreases over time below target temperature 524. A first time at which the exhaust temperature (*T*) represented by line 520 decreases to threshold temperature 522 is represented by a first vertical line 530 that is overlaid upon upper graph 510, middle graph 512, and lower graph 514 for purposes of comparison. A second time, subsequent to the first time, at which the exhaust temperature (*T*) represented by line 520 increases to threshold temperature 522 is represented by a second vertical line 532 that is overlaid upon upper graph 510, middle graph 512, and lower graph 514. A third time, subsequent to the second time, at which the exhaust temperature (*T*) represented by line 520 increases to target temperature 524 is represented by a third vertical line 534 that is overlaid upon upper graph 510, middle graph 512, and lower graph 514.

Middle graph 512 depicts an example relationship between idle time on the vertical axis and time on the horizontal axis. Idle time refers to a duration of time at which the engine (e.g., engine 102 of FIG. 1) was operated to product exhaust gases having exhaust temperature (T) that is less than threshold temperature 522 - i.e., the temperature at or above which the soot filter is regenerated. It will be understood that the term "idle" within the context of the idle time does not necessarily refer to an idle state of the engine.

In middle graph 512, an idle counter value 540 is depicted, as an example of current counter value 392 of FIG. 3 that is determined by control system 108. Idle counter value 540 is an example of counter value 392 of method 300 of FIG. 3 that can be determined by the control system. For example, the control system can perform method 300 of FIG. 3 to obtain idle counter value 540 at successive time intervals. In this example, idle counter value 540 is varied over time by the control system responsive to exhaust temperature (*T*) represented by line 520 in upper graph 510.

Furthermore, in FIG. 5, different counter rates, as previously described with reference to operation 380 of FIG. 3 are applied as gain factors to obtain different time-varying responses of the idle counter value to changes in exhaust temperature (*T*). In this example, idle counter values 540-1, 540-2, and 540-3 in FIG. 5 represent idle counter value 540 with different counter rates determined at operation 380 and applied at operation 390 of FIG. 3 for different values of (*ΔP_{SOOT}*). For example, idle counter value 540-1 has a larger counter rate, and hence a larger gain factor over time as compared to idle counter value 540. As another example, idle counter value 540-2 has a larger counter rate, and hence a larger gain factor over time as compared to idle counter value 540-1.

While exhaust temperature (*T*) represented by line 520 is initially greater than threshold temperature 522 prior to the first time represented by first vertical line 530, idle counter value 540 is maintained by the control system at an initial value of zero. In this example, idle counter value 540 is maintained by the control system due to counter rate 382 that is determined by the control system at 380 of method 300 representing no change to the counter value.

As the exhaust temperature (*T*) represented by line 520 decreases below threshold temperature 522 at the first time represented by vertical line 530, the control system begins increasing idle counter value 540, as an example of counter rate 382 determined by the control system at 380 of method 300 having a positive value. For example, the control system can increase idle counter value 540 by incrementing the idle counter value upwards to higher values based on counter rate 382 exhibiting a positive value. In some examples, idle counter value 540 is incremented upwards in time units (e.g., minutes) corresponding to a value of counter rate 382 determined by the control system.

While exhaust temperature (*T*) represented by line 520 is less threshold temperature 522 between the first time represented by first vertical line 530 and the second time represented by second vertical line 532, the control system continues to increase idle counter value 540 over time according to counter rate 382 determined over successive time intervals. The period of time during which exhaust temperature (*T*) represented by line 520 is less than threshold temperature 522 can be referred to as a loading phase 550 during which there is a net increase of soot at the soot filter.

At the second time represented by second vertical line 532, exhaust temperature (*T*) represented by line 520 increases to threshold temperature 522, and continues to increase over time until attaining target temperature 524 at the third time represented by third vertical line 534. While exhaust temperature (*T*) represented by line 520 is between threshold temperature 522 and target temperature 524, the control system can maintain idle counter value 540 at a fixed value. In this example, the control system determines at 380 of method 300 that counter rate 382 is a null value representing no change to the counter value. The period of time during which exhaust temperature (*T*) represented by line 520 is between threshold temperature 522 and target temperature 524 can be referred to as a holding phase 552 during which soot accumulation levels at the soot filter are generally maintained at steady state.

While the exhaust temperature represented by line 520 exceeds target temperature 524, such as after the third time represented by third vertical line 534, the control system decreases idle counter value 540. For example, the control system can decrease idle counter value 540 by decrementing the idle counter value downwards to lower values. In this example, counter rate 382 determined by the control system over successive time intervals is a negative value. The period of time during which exhaust temperature (*T*) represented by line 520 exceeds target temperature 524 can be referred to as cleaning phase 554 during which there is a net reduction in soot at the soot filter due to regeneration.

In some examples, idle counter value 540 is decremented downwards in time units (e.g., minutes) that are augmented by a parameterized factor, referred to herein as an idle counter step factor. Furthermore, in some examples, idle counter value 540 can be decremented downwards by the control system during cleaning phase 554 at a higher rate than a rate at which the idle counter value is incremented upwards by the control system during loading phase 550, depending on counter rate 382 of method 300 determined by the control system. An example of idle counter value 540 being decremented downwards in steps is represented schematically in FIG. 5 by an example step 544. Step 544 can correspond to a negative value of counter rate 382 that is applied to existing counter value 394 to obtain current counter value 392.

In FIG. 5, a maximum idle time 546 (e.g., in hours or other suitable time unit) is represented by a horizontal line overlaid upon middle graph 512. Maximum idle time 546 can be defined at the control system as a setting, for example. In the example scenario of FIG. 5, idle counter value 540 does not attain maximum idle time 546 due to exhaust temperature (*T*) represented by line 520 exceeding threshold temperature 522 at the second time represented by second vertical line 532.

Lower graph 514 depicts an example relationship between remaining idle time on the vertical axis, and time on the horizontal axis. In some examples, the control system can compute a remaining idle time value based on the idle counter value as a percentage of maximum idle time 546. In lower graph 514, a remaining idle time value 560 as a percentage of maximum idle time 546 is depicted. In this example, remaining idle time value 560 varies over time responsive to exhaust temperature (*T*) represented by line 520 depicted in upper graph 510. Additionally, in FIG. 5, remaining idle time value 560-1, 560-2, and 560-3 are depicted, which correspond to idle time counter values 540-1, 540-2, and 540-3. In this example, remaining idle time values 560-1, 560-2, and 560-3 vary over time at a higher rate than remaining idle time value 560 due to higher gain factors applied through corresponding instances of counter rate 382 of FIG. 3.

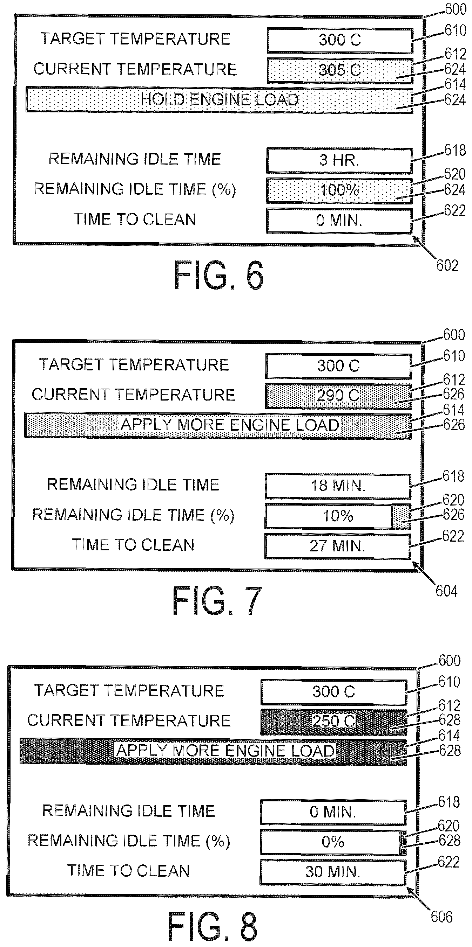

Furthermore, in lower graph 514, a warning threshold 562 and an alert threshold 564 are represented by horizontal lines. Warning threshold 562 corresponds to a greater remaining idle time as a percentage of maximum idle time 546 as compared to alert threshold 564. Warning threshold 562 and alert threshold 564 can be defined at the control system, and can take the form of settings, as an example. As described in further detail with reference to FIGS. 6-8, the control system can output a warning message via operator interface 110 responsive to remaining idle time value 560 attaining or being less than warning threshold 562. The warning message can be discontinued by the control system responsive to remaining idle time value 560 increasing above warning threshold 562. The control system can output an alert message via operator interface 110 responsive to remaining idle time value 560 attaining or being less alert threshold 564. The alert message can be discontinued by the control system responsive to remaining idle time value 560 increasing above alert threshold 564.

FIGS. 6, 7, and 8 depict examples of a graphical user interface (GUI) 600 that can be output by control system 108 of FIG. 1 via a display device. For example, GUI 600 can be output by the control system as part of outputting the current counter value at 396 of FIG. 3. GUI 600 can form part of operator interface 110 of FIG. 1, as an example. Furthermore, data and graphical elements of GUI 600 are examples of regeneration status (R) of FIG. 1 that can be output by control system 108.

GUI 600 can include various data fields by which corresponding data values can be output by the control system to provide feedback to a human operator. For example, GUI 600 includes a target temperature field 610 where a target temperature (e.g., 524 of FIG. 5) for regenerating the soot filter can be output, a current temperature field 612 where exhaust temperature (*T*) can be output, a message field 614 where a status message can be output, a remaining idle time field 618 where a remaining idle time in units of time (e.g., minutes and/or hours) can be output, a remaining idle time field 620 where a remaining idle time as a proportion (e.g., percentage %) of a maximum idle time (e.g., 546) can be output, and a time to clean field 622 where a time to clean (regenerate) the soot filter in units of time (e.g., minutes and/or hours) can be output.

In FIG. 6, GUI 600 includes a first set of data 602 for a first operating state of an exhaust system. In this example, the first operating state of the exhaust system corresponds to a current temperature that is greater than the target temperature, and the soot filter being in a clean state with respect to soot. For example, in FIG. 6, GUI 600 includes a target temperature of "300 C" at field 610, and a current temperature of "305 C" at field 612. Message field 614 in FIG. 6 includes a status message "HOLD ENGINE LOAD", which can inform the operator that the engine load is within a suitable range for producing exhaust gases of a temperature suitable for regenerating the soot filter. Field 618 in FIG. 6 includes "3 HR." identifying 3 hours of remaining idle time. Field 620 of FIG. 6 includes "100%" identifying that the remaining idle time is at 100% of the maximum idle time. Field 622 includes "0 MIN." identifying that the time to regenerate the soot filter is 0 minutes.

Additionally, GUI 600 can include graphical features such as color, shading, highlighting, and/or graphical elements that can provide visual feedback of the state of the engine and/or exhaust system to a human operator. In the example of FIG. 6, fields 612, 614, and 620 of GUI 600 include a first color 624 (e.g., green or other suitable color). Furthermore, in this example, first color 624 within field 620 takes the form of a graphical element that is sized (e.g., fully occupies field 612) to visually represent the value of 100% remaining idle time. For example, first color 624 within field 620 can take the form of or otherwise provide a graphical gauge, such as a bar graph.

In FIG. 7, GUI 600 includes a second set of data 604 for a second operating state of the exhaust system. In this example, the second operating state of the exhaust system corresponds to a current temperature that is less than the target temperature, and the soot filter not being in a clean state due to accumulation of soot at the soot filter. For example, in FIG. 7, GUI 600 includes the target temperature of "300 C" at field 610, and a current temperature of "290 C" at field 612 corresponding to exhaust temperature (*T*). Message field 614 in FIG. 7 includes a status message "APPLY MORE ENGINE LOAD", which can inform the operator that the engine load should be increased to raise the exhaust temperature (*T*) to enable the regeneration process with respect to the soot filter. As another example, message field 614 can include a status message "INCREASE EXHAUST TEMPERATURE" to inform the operator that the exhaust temperature (*T*) should be increased to enable the regeneration process. Field 618 in FIG. 7 includes "18 MIN." identifying 18 minutes of remaining idle time before a maximum idle time (e.g., 546 of FIG. 5) is attained. Field 620 of FIG. 7 includes "10%" identifying the remaining idle time as a percentage of the maximum idle time. Field 622 includes "27 MIN." identifying that the time to regenerate the soot filter is 27 minutes.

Additionally, in the example of FIG. 7, fields 612, 614, and 620 of GUI 600 include a second color 626 (e.g., yellow or other suitable color), in contrast to first color 624 of FIG. 6. Second color 626 within field 620 is sized (e.g., reduced in size relative to first color 624 of field 620 in FIG. 6) to visually represent the 10% remaining idle time. For example, second color 626 within field 620 can take the form of or otherwise provide a graphical gauge, such as a bar graph.

In FIG. 8, GUI 600 includes a third set of data 606 for a third operating state of the exhaust system. In this example, the third operating state of the exhaust system corresponds to a current temperature that is less than the target temperature, with no remaining idle time due to the accumulation of soot at the soot filter. For example, in FIG. 8, GUI 600 includes the target temperature of "300 C" at field 610, and a current temperature of "250 C" at field 612. Message field 614 in FIG. 8 includes a status message "APPLY MORE ENGINE LOAD", which can inform the operator that the engine load should be increased to regenerate the soot filter. Field 618 in FIG. 8 includes "0 MIN." identifying that there is no remaining idle time. Field 620 of FIG. 8 includes "0%" identifying that the remaining idle time as a percentage of the maximum idle time. Field 622 includes "30 MIN." identifying that the time to regenerate the soot filter is 30 minutes.

Additionally, in the example of FIG. 8, fields 612, 614, and 620 of GUI 600 include a third color 628 (e.g., red or other suitable color) that differs from first color 624 of FIG. 6 and second color 626 of FIG. 7. Third color 628 within field 620 is sized (e.g., reduced in size relative to second color 626 of field 620 in FIG. 7) to visually represent the 0% remaining idle time. For example, third color 628 within field 620 can take the form of or otherwise provide a graphical gauge, such as a bar graph.

In some scenarios, pursuant to the representation of the regeneration status (R), such as via GUI 600 of FIGS. 6-8, the operator of powertrain system 100 may increase the mechanical load on the engine, which typically increases exhaust temperature. In some scenarios the operator may maintain the current engine speed while taking one or more additional actions. Such actions may include opening a waste gate which decreases the compression of the intake air, or increasing the HP EGR and/or LP EGR ratio. In some scenarios the operator may adjust engine operation to enrich the air-to-fuel ratio or inject fuel directly into the exhaust flow upstream of the oxidation catalyzer. In some examples the actions taken to increase and decrease the exhaust temperature are actions performed at the discretion of the operator. However, in some examples, control system 108 can be configured to programmatically adjust the mechanical load or operation of engine 102 to adjust exhaust temperature (*T*) to a target value suitable for regenerating the soot filter.

The methods, operations, and functionality described herein can be tied to a computing system of one or more computing devices. As an example, control system 108 of FIG. 1 can take the form of or can include a computing system of one or more computing devices. FIG. 9 shows aspects of an example computer system 900 that can form part of control system 108 of FIG. 1. As an example, computing system 900 of FIG. 9 can perform or otherwise implement methods 300 of FIG. 3 and 400 of FIG. 4.

Computer system 900 includes a logic machine 910, storage machine 912, and an input / output (I/O) subsystem 914. Logic machine 910 includes one or more physical logic devices configured to execute instructions 916 and process data 918 stored at storage machine 912. For example, the logic machine is configured to execute instructions 916 that are part of one or more programs. Instructions 916 and data 918 of storage machine 912 executed by logic machine 910 is an example of logic 180 of control system 108 of FIG. 1.

The logic machine can include at least one hardware processor devices (*e.g.,* microprocessor, central processor, central processing unit (CPU) and/or graphics processing unit (GPU)) configured to execute software instructions. Additionally or alternatively, the logic machine can include at least one hardware or firmware device configured to execute hardware or firmware instructions. Processor devices of the logic machine can be single-core or multi-core, and the instructions executed thereon may be configured for sequential, parallel, and/or distributed processing. Individual components of the logic machine optionally may be distributed among two or more separate devices, which may be remotely located and/or configured for coordinated processing.

Storage machine 912 includes one or more physical storage devices having instructions 916 and data 918 stored thereon. Storage machine 912 can include volatile, nonvolatile, dynamic, static, read/write, read-only, random-access, sequential-access, location-read addressable, file-read addressable, and/or content-read addressable computer-memory devices. Storage machine 912 can include removable and/or built-in computer-memory devices. When the logic machine executes instructions 916 or processes data 918, the state of storage machine 912 can be transformed-*e.g*., to hold different data.

Aspects of logic machine 910 and storage machine 912 can be integrated together into one or more hardware-logic components. Any such hardware-logic component can include a program- or application-specific IC (PASIC / ASIC), program- or application-specific standard product (PSSP / ASSP), system-on-a-chip (SOC), or complex programmable logic device (CPLD), for example.

I/O subsystem 914 can communicatively couple computing system 900 with one or more input devices and/or output devices. Examples of an input device include the various sensor devices described herein, as well as operator interface 110 of FIG. 1. Examples of output devices include operator interface 110, as well as other peripheral or integrated display devices and/or audio speakers. I/O subsystem 914 can include a communications interface that enables computing system 900 to communicate with other devices over a communications network or communications link.

Computing system 900, as an example of an electronic control system, can actuate electronically controllable valves, actuators, and other componentry of powertrain 100 of FIG. 1, as well as engine 202 and exhaust system 204 of FIG. 2, including throttle valves, compressor bypass valves, waste gates, EGR valves, and engine intake and exhaust values, as examples.

Further, the disclosure comprises configurations according to the following examples.

Example 1. A powertrain system, comprising: an internal combustion engine that includes a set of one or more cylinders; an exhaust system that defines an exhaust flow path for exhaust gases produced by the set of cylinders of the engine, wherein the exhaust system includes: a regenerative soot filter located along the exhaust flow path, an exhaust temperature sensor located along the exhaust flow path that provides a measurement of an exhaust temperature, an upstream exhaust pressure sensor located along the exhaust flow path upstream of the regenerative soot filter that provides a measurement of an upstream exhaust pressure, and a downstream exhaust pressure sensor located along the exhaust flow path downstream of the regenerative soot filter that provides a measurement of a downstream exhaust pressure; an operator interface; and an electronic control system configured to: determine a pressure differential across the regenerative soot filter based on the upstream exhaust pressure and the downstream exhaust pressure; determine a counter value representing a regeneration status of the regenerative soot filter based on the exhaust temperature and the pressure differential across the regenerative soot filter; and output the counter value representing the regeneration status via the operator interface.

Example 2. The powertrain system of Example 1, wherein the electronic control system is further configured to: attribute a portion of the pressure differential due to soot accumulation at the regenerative soot filter; wherein the electronic control system is configured to determine the counter value based on the portion of the pressure differential attributed to soot accumulation at the regenerative soot filter.

Example 3. The powertrain system of Example 2, wherein the electronic control system is further configured to: attribute a portion of the pressure differential due to ash accumulation at the regenerative soot filter; wherein the electronic control system is configured to attribute the portion of the pressure differential due to soot accumulation based on the portion of the pressure differential due to ash accumulation.

Example 4. The powertrain system of Example 3, wherein the electronic control system is configured to attribute the portion of the pressure differential due to soot accumulation further based on a portion of the pressure differential due to the regenerative soot filter being located along the exhaust flow path in the absence of the soot accumulation and the ash accumulation.

Example 5. The powertrain system of Example 3, wherein the electronic control system is further configured to: attribute the portion of the pressure differential due to ash accumulation based on one or more of a fuel rate, an exhaust flow rate, and/or an air flow rate for the set of cylinders of the engine.

Example 6. The powertrain system of Example 5, wherein the electronic control system is further configured to determine an amount of ash produced by the set of cylinders over a period of time by: for each time interval of multiple time intervals of the period of time, determining an amount of ash produced by the set of cylinders at that time interval based on one or more of the fuel rate, the exhaust flow rate, and/or the air flow rate for that time interval, and aggregating the amount of ash produced at each time interval of the multiple time intervals to obtain the amount of ash produced by the set of cylinders over the period of time; and wherein the electronic control system is further configured to attribute the portion of the pressure differential due to ash accumulation based on the amount of ash produced by the set of cylinders over the period of time.

Example 7. The powertrain system of Example 2, wherein the electronic control system is further configured to determine the counter value representing the regeneration status by: applying a counter rate to a previous counter value to obtain the counter value; and determining the counter rate based on the exhaust temperature and the portion of the pressure differential attributed to soot accumulation at the regenerative soot filter; wherein the exhaust temperature defines an upward or downward direction of the counter rate, and wherein the pressure differential attributed to soot accumulation at the regenerative soot filter defines a magnitude of the counter rate.

Example 8. The powertrain system of Example 1, wherein the electronic control system is further configured to output a warning message or an alert message via the operator interface responsive to the counter value attaining or exceeding a threshold.

Example 9. A method performed by an electronic control system for a powertrain system that includes an internal combustion engine and an exhaust system, the method comprising: determining a pressure differential across a regenerative soot filter of the exhaust system based on an upstream exhaust pressure measured upstream of the regenerative soot filter and a downstream exhaust pressure measured downstream of the regenerative soot filter; determining a counter value representing a regeneration status of the regenerative soot filter based on an exhaust temperature measured along an exhaust flow path of the exhaust system and the pressure differential across the regenerative soot filter; and outputting the counter value representing the regeneration status via an operator interface of the powertrain system.

Example 10. The method of Example 9, further comprising: attributing a portion of the pressure differential due to soot accumulation at the regenerative soot filter; and determining the counter value based on the portion of the pressure differential attributed to soot accumulation at the regenerative soot filter.

Example 11. The method of Example 10, further comprising: attributing a portion of the pressure differential due to ash accumulation at the regenerative soot filter; wherein attributing the portion of the pressure differential due to soot accumulation is based on the portion of the pressure differential due to ash accumulation.

Example 12. The method of Example 11, further comprising: attributing the portion of the pressure differential due to soot accumulation further based on a portion of the pressure differential due to the regenerative soot filter being located along the exhaust flow path in the absence of the soot accumulation and the ash accumulation.

Example 13. The method of Example 11, further comprising: attributing the portion of the pressure differential due to ash accumulation based on one or more of a fuel rate, an exhaust flow rate, an air flow rate for the set of cylinders of the engine.

Example 14. The method of Example 13, further comprising: determining an amount of ash produced by the set of cylinders over a period of time by: for each time interval of multiple time intervals of the period of time, determining an amount of ash produced by the set of cylinders at that time interval based on one or more of the fuel rate, the exhaust flow rate, and/or the air flow rate for that time interval, and aggregating the amount of ash produced at each time interval of the multiple time intervals to obtain the amount of ash produced by the set of cylinders over the period of time; wherein attributing the portion of the pressure differential due to ash accumulation is based on the amount of ash produced by the set of cylinders over the period of time.

Example 15. The method of Example 10, further comprising: determining the counter value representing the regeneration status by: applying a counter rate to a previous counter value to obtain the counter value; and determining the counter rate based on the exhaust temperature and the portion of the pressure differential attributed to soot accumulation at the regenerative soot filter; wherein the exhaust temperature defines an upward or downward direction of the counter rate, and wherein the pressure differential attributed to soot accumulation at the regenerative soot filter defines a magnitude of the counter rate.

Example 16. The method of Example 9, further comprising: outputting a warning message or an alert message via the operator interface responsive to the counter value attaining or exceeding a threshold.

Example 17. A computing system for controlling a powertrain system that includes an internal combustion engine and an exhaust system, the computing system comprising: a logic machine; and a storage machine having instructions stored thereon executable by the logic machine to: determine a pressure differential across a regenerative soot filter of the exhaust system based on an upstream exhaust pressure measured upstream of the regenerative soot filter and a downstream exhaust pressure measured downstream of the regenerative soot filter; determine a counter value representing a regeneration status of the regenerative soot filter based on an exhaust temperature measured along an exhaust flow path of the exhaust system and the pressure differential across the regenerative soot filter; and output the counter value representing the regeneration status.

Example 18. The computing system of Example 17, wherein the instructions are further executable by the logic machine to: attribute a portion of the pressure differential due to soot accumulation at the regenerative soot filter; determine the counter value based on the portion of the pressure differential attributed to soot accumulation at the regenerative soot filter.

Example 19. The computing system of Example 18, wherein the instructions are further executable by the logic machine to: attribute a portion of the pressure differential due to ash accumulation at the regenerative soot filter; wherein attributing the portion of the pressure differential due to soot accumulation is based on the portion of the pressure differential due to ash accumulation.

Example 20. The computing system of Example 19, wherein the instructions are further executable by the logic machine to: attribute the portion of the pressure differential due to soot accumulation further based on a portion of the pressure differential due to the regenerative soot filter being located along the exhaust flow path in the absence of the soot accumulation and the ash accumulation.

Example 21. An electronic control system configured to: determine a pressure differential across a regenerative soot filter located along an exhaust flow path of an exhaust system based on an upstream exhaust pressure measured along the exhaust flow path upstream of the regenerative soot filter and a downstream exhaust pressure measured along the exhaust flow path downstream of the regenerative soot filter; determine a counter value representing a regeneration status of the regenerative soot filter based on an exhaust temperature measured along the exhaust flow path and the pressure differential across the regenerative soot filter; and output the counter value representing the regeneration status.

Example 22. The electronic control system of Example 21, further configured to: attribute a portion of the pressure differential due to soot accumulation at the regenerative soot filter; and determine the counter value based on the portion of the pressure differential attributed to soot accumulation at the regenerative soot filter.

Example 23. The electronic control system of Example 22, further configured to: attribute a portion of the pressure differential due to ash accumulation at the regenerative soot filter; and attribute the portion of the pressure differential due to soot accumulation based on the portion of the pressure differential due to ash accumulation.

Example 24. The electronic control system of Example 23, further configured to: attribute the portion of the pressure differential due to soot accumulation further based on a portion of the pressure differential due to the regenerative soot filter being located along the exhaust flow path in the absence of the soot accumulation and the ash accumulation.

Example 25. The electronic control system of Example 23, further configured to: attribute the portion of the pressure differential due to ash accumulation based on one or more of a fuel rate, an exhaust flow rate, and/or an air flow rate for a set of cylinders of an engine.

Example 26. The electronic control system of Example 25, further configured to: determine an amount of ash produced by the set of cylinders of the engine over a period of time by: for each time interval of multiple time intervals of the period of time, determining an amount of ash produced by the set of cylinders of the engine at that time interval based on one or more of the fuel rate, the exhaust flow rate, and/or the air flow rate for that time interval, and aggregating the amount of ash produced at each time interval of the multiple time intervals to obtain the amount of ash produced by the set of cylinders over the period of time; and attribute the portion of the pressure differential due to ash accumulation based on the amount of ash produced by the set of cylinders over the period of time.

Example 27. The electronic control system of Example 22, further configured to: determine the counter value representing the regeneration status by: applying a counter rate to a previous counter value to obtain the counter value; and determining the counter rate based on the exhaust temperature and the portion of the pressure differential attributed to soot accumulation at the regenerative soot filter; wherein the exhaust temperature defines an upward or downward direction of the counter rate, and wherein the pressure differential attributed to soot accumulation at the regenerative soot filter defines a magnitude of the counter rate.

Example 28. The electronic control system of Example 21, further configured to output a warning message or an alert message responsive to the counter value attaining or exceeding a threshold.

Example 29. The electronic control system of Example 21, wherein the upstream exhaust pressure is measured by an upstream pressure sensor located along the exhaust flow path of the exhaust system upstream of the regenerative soot filter.

Example 30. The electronic control system of Example 21, wherein the downstream exhaust pressure is measured by a downstream pressure sensor located along the exhaust flow path of the exhaust system downstream of the regenerative soot filter.

Example 31. The electronic control system of Example 21, wherein the exhaust temperature is measured by an exhaust temperature sensor located along the exhaust flow path of the exhaust system.

Example 32. In any of Examples 5, 6, 13, 14, 25, 26, wherein the fuel rate is measured by a fuel rate sensor.

Example 33. In any of Examples 5, 6, 13, 14, 25, 26, wherein the exhaust flow rate is measured by an exhaust flow rate sensor located along the exhaust flow path of the exhaust system.

Example 34. In any of Examples 5, 6, 13, 14, 25, 26, wherein the air flow rate is measured by an air flow rate sensor.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A powertrain system, comprising:
an internal combustion engine (102) that includes a set of one or more cylinders;
an exhaust system (104) that defines an exhaust flow path for exhaust gases produced by the set of cylinders of the engine, wherein the exhaust system includes:
a regenerative soot filter (126) located along the exhaust flow path,
an exhaust temperature sensor (136) located along the exhaust flow path that provides a measurement of an exhaust temperature,
an upstream exhaust pressure sensor (132) located along the exhaust flow path upstream of the regenerative soot filter that provides a measurement of an upstream exhaust pressure, and
a downstream exhaust pressure sensor (134) located along the exhaust flow path downstream of the regenerative soot filter that provides a measurement of a downstream exhaust pressure;
an operator interface (110); and
an electronic control system (108) configured to:
determine a pressure differential across the regenerative soot filter based on the upstream exhaust pressure and the downstream exhaust pressure;
determine a counter value representing a regeneration status of the regenerative soot filter based on the exhaust temperature and the pressure differential across the regenerative soot filter; and
output the counter value representing the regeneration status via the operator interface.

2. The powertrain system of claim 1, wherein the electronic control system (108) is further configured to:
attribute a portion of the pressure differential due to soot accumulation at the regenerative soot filter;
wherein the electronic control system is configured to determine the counter value based on the portion of the pressure differential attributed to soot accumulation at the regenerative soot filter.

3. The powertrain system of claim 1 or 2, wherein the electronic control system (108) is further configured to:
attribute a portion of the pressure differential due to ash accumulation at the regenerative soot filter;
wherein the electronic control system is configured to attribute the portion of the pressure differential due to soot accumulation based on the portion of the pressure differential due to ash accumulation.

4. The powertrain system of claim 3, wherein the electronic control system (108) is configured to attribute the portion of the pressure differential due to soot accumulation further based on a portion of the pressure differential due to the regenerative soot filter being located along the exhaust flow path in the absence of the soot accumulation and the ash accumulation.

5. The powertrain system of claim 3 or 4, wherein the electronic control system (108) is further configured to:
attribute the portion of the pressure differential due to ash accumulation based on one or more of a fuel rate, an exhaust flow rate, and/or an air flow rate for the set of cylinders of the engine.

6. The powertrain system of claim 5, wherein the electronic control system (108) is further configured to determine an amount of ash produced by the set of cylinders over a period of time by:
for each time interval of multiple time intervals of the period of time, determining an amount of ash produced by the set of cylinders at that time interval based on one or more of the fuel rate, the exhaust flow rate, and/or the air flow rate for that time interval, and
aggregating the amount of ash produced at each time interval of the multiple time intervals to obtain the amount of ash produced by the set of cylinders over the period of time; and
wherein the electronic control system is further configured to attribute the portion of the pressure differential due to ash accumulation based on the amount of ash produced by the set of cylinders over the period of time.

7. The powertrain system of claim 2, or any of claims 3-6 when dependent on claim 2, wherein the electronic control system (108) is further configured to determine the counter value representing the regeneration status by:
applying a counter rate to a previous counter value to obtain the counter value; and
determining the counter rate based on the exhaust temperature and the portion of the pressure differential attributed to soot accumulation at the regenerative soot filter;
wherein the exhaust temperature defines an upward or downward direction of the counter rate, and wherein the pressure differential attributed to soot accumulation at the regenerative soot filter defines a magnitude of the counter rate.

8. The powertrain system of any of the preceding claims, wherein the electronic control system (108) is further configured to output a warning message or an alert message via the operator interface responsive to the counter value attaining or exceeding a threshold.

9. A method performed by an electronic control system (108) for a powertrain system that includes an internal combustion engine (102) and an exhaust system (104), the method comprising:
determining a pressure differential across a regenerative soot filter (126) of the exhaust system based on an upstream exhaust pressure measured upstream of the regenerative soot filter and a downstream exhaust pressure measured downstream of the regenerative soot filter;
determining a counter value representing a regeneration status of the regenerative soot filter based on an exhaust temperature measured along an exhaust flow path of the exhaust system and the pressure differential across the regenerative soot filter; and
outputting the counter value representing the regeneration status via an operator interface (110) of the powertrain system.

10. The method of claim 9, further comprising at least one of:
attributing a portion of the pressure differential due to soot accumulation at the regenerative soot filter, and determining the counter value based on the portion of the pressure differential attributed to soot accumulation at the regenerative soot filter;
attributing a portion of the pressure differential due to ash accumulation at the regenerative soot filter, wherein attributing the portion of the pressure differential due to soot accumulation is based on the portion of the pressure differential due to ash accumulation;
attributing the portion of the pressure differential due to soot accumulation further based on a portion of the pressure differential due to the regenerative soot filter being located along the exhaust flow path in the absence of the soot accumulation and the ash accumulation; and
attributing the portion of the pressure differential due to ash accumulation based on one or more of a fuel rate, an exhaust flow rate, and/or an air flow rate for the set of cylinders of the engine.

11. The method of claim 10, further comprising:
determining an amount of ash produced by the set of cylinders over a period of time by:
for each time interval of multiple time intervals of the period of time, determining an amount of ash produced by the set of cylinders at that time interval based on one or more of the fuel rate, the exhaust flow rate, and/or the air flow rate for that time interval, and
aggregating the amount of ash produced at each time interval of the multiple time intervals to obtain the amount of ash produced by the set of cylinders over the period of time; and
wherein attributing the portion of the pressure differential due to ash accumulation is based on the amount of ash produced by the set of cylinders over the period of time.

12. The method of claim 10 or 11, further comprising:
determining the counter value representing the regeneration status by:
applying a counter rate to a previous counter value to obtain the counter value; and
determining the counter rate based on the exhaust temperature and the portion of the pressure differential attributed to soot accumulation at the regenerative soot filter;
wherein the exhaust temperature defines an upward or downward direction of the counter rate, and wherein the pressure differential attributed to soot accumulation at the regenerative soot filter defines a magnitude of the counter rate.

13. The method of any of claims 9-12, further comprising:
outputting a warning message or an alert message via the operator interface responsive to the counter value attaining or exceeding a threshold.

14. A computing system for controlling a powertrain system that includes an internal combustion engine (102) and an exhaust system (104), the computing system comprising:
a logic machine; and
a storage machine having instructions stored thereon executable by the logic machine to:
determine a pressure differential across a regenerative soot filter of the exhaust system based on an upstream exhaust pressure measured upstream of the regenerative soot filter and a downstream exhaust pressure measured downstream of the regenerative soot filter;
determine a counter value representing a regeneration status of the regenerative soot filter based on an exhaust temperature measured along an exhaust flow path of the exhaust system and the pressure differential across the regenerative soot filter; and
output the counter value representing the regeneration status.

15. The computing system of claim 14, wherein the instructions are further executable by the logic machine to:
attribute a portion of the pressure differential due to soot accumulation at the regenerative soot filter, and determine the counter value based on the portion of the pressure differential attributed to soot accumulation at the regenerative soot filter; and/or
attribute a portion of the pressure differential due to ash accumulation at the regenerative soot filter, wherein attributing the portion of the pressure differential due to soot accumulation is based on the portion of the pressure differential due to ash accumulation; and/or
attribute the portion of the pressure differential due to soot accumulation further based on a portion of the pressure differential due to the regenerative soot filter being located along the exhaust flow path in the absence of the soot accumulation and the ash accumulation.
